# EUROPEAN PATENT APPLICATION

(11) **EP 4 691 861 A1**
(43) Date of publication of application: **11.02.2026**
(21) Application number: 23930139.3
(22) Date of filing: 26.12.2023
(51) Int. Cl.: B60R 22/12, H05B 3/34

(54) **SEAT BELT SYSTEM, CONTROL ASSEMBLY AND CONTROL METHOD**

(30) Priority: 31.03.2023 CN 202310344411
(71) Applicant: Autoliv Development AB, 447 83 Vårgårda (SE)
(72) Inventor: TENG, Yue, Shanghai 201807 (CN); GE, Liang, Shanghai 201807 (CN)
(74) Representative: Müller Verweyen
(86) International application number: PCT/CN2023/142051
(87) International publication number: WO 2024/198576

(57) **Abstract**

A seat belt system, a control assembly, and a control method. The seat belt system (10) includes a seat belt webbing (11) including a tubular section (111) defining a passage; and a heater module (12), including a heating pad arranged within the passage and heating wires fixed on the heating pad; wherein the heating wires include a first heating wire (112) and a second heating wire (113) connected in parallel to a printed circuit board (114), wherein the first heating wire (112) has a first extension length extending in the length direction of the seat belt webbing (11), the second heating wire (113) has a second extension length extending in the length direction, and the first extension length is greater than the second extension length; and the first heating wire (112) includes a first heating section (1121) and a second heating section (1122) connected in series, the heating power of the first heating section (1121) is less than the heating power of the second heating section (1122), and the first heating section (1121) and the second heating wire (113) at least partially overlap in the thickness direction of the seat belt webbing (11). The control assembly (100) and the control method are used for controlling a heating operation of the seat belt webbing (11) in the seat belt system (10).

## Description

### TECHNICAL FIELD

The present invention relates to a safety apparatus of a vehicle, and in particular to a seat belt system, and a control assembly and a control method for the seat belt system.

### BACKGROUND ART

In order to achieve both safety and comfort, heated seat belts have been equipped in vehicles. The same as a conventional seat belt, the heated seat belt, used as a safety apparatus, is used to restrain an occupant during a collision, and to prevent a secondary collision between the occupant and a steering wheel, a dashboard, and the like during the collision, or to prevent the occupant from being thrown out of the vehicle during the collision, thereby causing death or injury. Generally, a heating conductor is woven in a webbing of the heated seat belt, and an occupant can feel warmth simply by turning on a heating switch of the heated seat belt without the need to turn on an air conditioner to heat the entire vehicle. Therefore, the heated seat belt can reduce the amount of power consumed by the air conditioner, which is very advantageous for an electric vehicle.

However, in existing heated seat belts, a heating function is provided on a limited portion of the webbing, making it difficult to provide a sufficiently warm and comfortable experience to occupants.

Therefore, it is desirable to provide a seat belt that provides a better experience.

### SUMMARY OF THE INVENTION

The object of the present invention is to provide a seat belt system that provides a better experience, which can provide an occupant with options for heating different body parts, and further provide a control assembly and a control method for the seat belt system.

Provided in an aspect of the present invention is a seat belt system, comprising:
a seat belt webbing, comprising a tubular section defining a passage; and
a heater module, comprising a heating pad arranged within the passage and heating wires fixed on the heating pad;
wherein,
the heating wires comprise a first heating wire and a second heating wire connected in parallel to a printed circuit board, wherein the first heating wire has a first extension length extending in the length direction of the seat belt webbing, the second heating wire has a second extension length extending in the length direction, and the first extension length is greater than the second extension length; and
the first heating wire comprises a first heating section and a second heating section connected in series, the heating power of the first heating section is less than the heating power of the second heating section, and the first heating section and the second heating wire at least partially overlap in the thickness direction of the seat belt webbing.

According to an embodiment of the present invention, the seat belt system further comprises a control module configured to control a heating operation of the heater module, wherein the printed circuit board is provided with connecting posts in the form of protruding posts, and the connecting posts pass through the seat belt webbing to be electrically connected to the control module.

According to an embodiment of the present invention, the connecting posts comprise a pair of first connecting posts electrically connected to the first heating wire, and a pair of second connecting posts electrically connected to the second heating wire.

According to an embodiment of the present invention, a thermistor configured to monitor the temperature of the heating pad is further provided on the printed circuit board, and the connecting posts further comprise a pair of third connecting posts electrically connected to the thermistor.

According to an embodiment of the present invention, the first heating section and the second heating section are manufactured from materials having different electrical resistivities and are electrically connected to each other at respective end portions.

According to an embodiment of the present invention, only one heating pad is provided, one end of the heating pad is provided with the printed circuit board and the other end thereof is provided with a guide portion, wherein the guide portion is configured to pass through the passage from a first end of the passage to reach and be fixed to a second end of the passage opposite to the first end.

Provided in another aspect of the present invention is a control assembly, configured to control a heating operation of the seat belt webbing in any above-described seat belt system,
wherein,
the control assembly comprises a selection module and an execution module, wherein the selection module comprises heating mode 1, heating mode 2, and heating mode 3 for an occupant to select, and the execution module comprises the first heating wire and the second heating wire and is configured to execute a heating operation via at least one of the first heating wire and the second heating wire in response to the occupant's selection,
wherein,
heating mode 1 is defined as only the first heating wire executing a heating operation, heating mode 2 is defined as only the second heating wire executing a heating operation, and heating mode 3 is defined as both the first heating wire and the second heating wire executing a heating operation.

According to an embodiment of the present invention, the selection module is configured as a control panel communicating with an electronic control unit of a vehicle.

According to an embodiment of the present invention, heating mode 1 is configured to heat the chest of the occupant, heating mode 2 is configured to heat the abdomen of the occupant, and heating mode 3 is configured to heat the abdomen and the chest of the occupant.

Provided in an aspect of the present invention is a control method, which is used to control a heating operation of the seat belt webbing in any above-described seat belt system,
wherein the method comprises the following steps:
selecting, by an occupant, heating mode 1, heating mode 2, or heating mode 3; and
executing a heating operation in response to the occupant's selection,
wherein,
heating mode 1 is defined as only the first heating wire executing a heating operation, heating mode 2 is defined as only the second heating wire executing a heating operation, and heating mode 3 is defined as both the first heating wire and the second heating wire executing a heating operation.

### BRIEF DESCRIPTION OF THE DRAWINGS

The features, advantages, and technical effects of exemplary embodiments of the present invention will be described below with reference to the accompanying drawings. In the accompanying drawings, the same reference numbers denote the same elements, wherein
FIG. 1 and FIG. 2 schematically illustrate a seat belt system according to an embodiment of the present invention.
FIG. 3 schematically illustrates a control assembly according to the present invention.
FIG. 4 schematically illustrates a control method according to the present invention.

### DETAILED DESCRIPTION OF PREFERRED EMBODIMENTS

Specific embodiments of a seat belt system, a control assembly, and a control method according to the present invention will be described below with reference to the accompanying drawings. The following detailed description and the accompanying drawings are used to exemplarily explain the principles of the present invention. The present invention is not limited to the described preferred embodiments, and various embodiments described in the present invention can be used individually or in any combination. The scope of protection of the present invention is defined by the claims.

In addition, terms for spatial relations (such as "upper", "lower", "left", "right", etc.) are used to describe a relative positional relationship between an element and another element shown in the accompanying drawings. Therefore, the terms for spatial relations may be applied to directions different from the directions shown in the accompanying drawings during use. Obviously, although all of these terms for spatial relations refer to the directions shown in the accompanying drawings for ease of explanation, a person skilled in the art will appreciate that directions different from the directions shown in the drawings may be used.

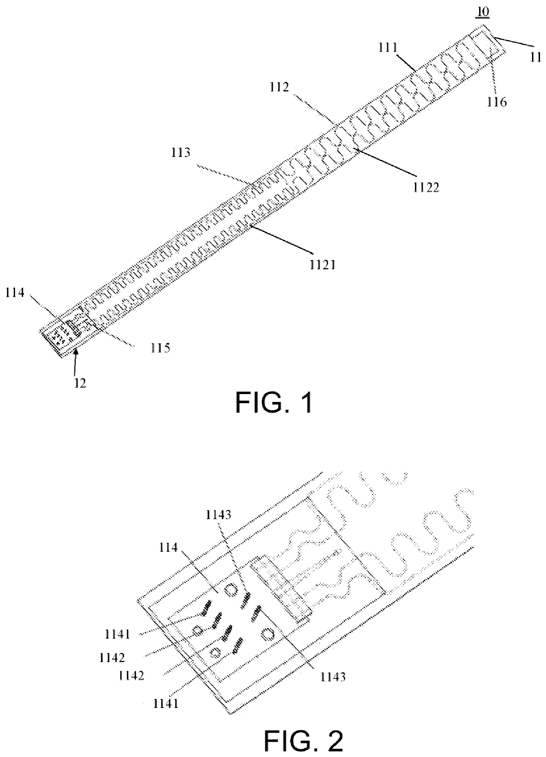

FIG. 1 and FIG. 2 schematically illustrate a seat belt system according to an embodiment of the present invention. The seat belt system according to an embodiment of the present invention is described below with reference to FIG. 1 and FIG. 2.

As shown in FIG. 1, a seat belt system 10 of the present invention includes a seat belt webbing 11 and a heater module 12.

The seat belt webbing 11 includes a tubular section 111 defining a passage. The tubular section 111 may include, for example, two layers of fabric that are stacked one above the other, and the two layers of fabric are connected (for example, via a seam) at edges extending in the length direction to form an elongated passage. The passage has two ends opposite to each other in the length direction and may be used as an accommodating space, which will be described later. In addition, the same as a conventional seat belt, two ends of the seat belt webbing 11 are respectively provided with a seat belt retractor and a buckle tongue, and the seat belt webbing is wound around a winding shaft in the seat belt retractor to adjust the length of the seat belt webbing. The buckle tongue at one end of the seat belt webbing is used in cooperation with a seat belt buckle fixed to a seat to fix the end of the seat belt webbing 11 to the seat, that is, an occupant fastens the seat belt by inserting the buckle tongue into the buckle.

The heater module 12 includes a heating pad arranged within the passage and heating wires fixed on the heating pad. As shown in FIG. 1, the heating wires include a first heating wire 112 and a second heating wire 113, and the two heating wires are shown in the figure in different bending patterns, that is, the first heating wire 112 is bent in a sparser manner, and the second heating wire 113 is bent in a denser manner. Certainly, the above-mentioned bending patterns with different densities are to clearly show the first heating wire and the second heating wire, respectively, and the heater module of the present invention is not limited thereto. The density of the first heating wire and the second heating wire may be set according to actual needs. In addition, the first heating wire 112 and the second heating wire 113 overlap in the thickness direction of the seat belt webbing 11, resulting in the second heating wire 113 covering a portion of the first heating wire 112.

The heater module 12 further includes a printed circuit board 114. In FIG. 1, the printed circuit board 114 is shown at the left end of the heating wires, and the first heating wire 112 and the second heating wire 113 are connected in parallel to the printed circuit board 114. In addition, as can be clearly seen from FIG. 1, the first heating wire 112 has a first extension length extending in the length direction of the seat belt webbing 11, the second heating wire 113 has a second extension length extending in the length direction of the seat belt webbing 11, and the first extension length is greater than the second extension length. The first heating wire 112 includes a first heating section 1121 and a second heating section 1122 connected in series, the heating power of the first heating section 1121 is designed to be less than the heating power of the second heating section 1122, and the first heating section 1121 of the first heating wire 112 and the second heating wire 113 at least partially overlap in the thickness direction of the seat belt webbing 11. Therefore, the first heating section 1121 is not clearly shown in FIG. 1.

As an example, the first heating section and the second heating section are manufactured from materials having different electrical resistivities and are electrically connected to each other at respective end portions. For example, the first heating section is manufactured as a plain conductor, and the second heating section is manufactured as an enameled copper-clad steel heating wire. The first heating section and the second heating section can be connected to each other via a welding process or a weaving manner.

As another example, the first heating section and the second heating section may also be manufactured using the same material (e.g., an enameled copper-clad steel wire), and the heating power of the first heating section is set to be less than the heating power of the second heating section. For example, different heating sections are designed with heating wires having different lengths, and different heating wire arrangement patterns are designed for different heating sections, so that the first heating section and the second heating section have different powers.

That is, for the first heating wire 112, the heating power of the first heating section 1121 is set to be less than the heating power of the second heating section 1122, so that a heating amount of the first heating section 1121 is smaller, and a heating amount of the second heating section 1122 is larger. The first heating wire 112 executes a heating operation almost entirely via the second heating section 1122. The heating amount of the first heating section 1121 may be ignored, and the first heating section 1121 mainly serves as a conductor section for electrically connecting the second heating section 1121 to the printed circuit board 114.

Therefore, in the seat belt system of the present invention, the first heating wire and the second heating wire are connected in parallel to the printed circuit board, and the first extension length of the first heating wire extending in the length direction of the seat belt webbing is greater than the second extension length of the second heating wire extending in the length direction, so that different heating wires heat different body parts of the occupant via sections extending to different positions. Therefore, the seat belt webbing of the seat belt system of the present invention can heat different body parts of the occupant independently of each other via the first heating wire and the second heating wire, so as to provide the occupant with selectable, sufficiently warm and comfortable heating functions, thereby improving the experience of the occupant.

According to an embodiment of the present disclosure, only one heating pad is provided, and both the first heating wire and the second heating wire are provided on the heating pad. In order to quickly position the heating pad into the passage of the tubular section 111 of the seat belt webbing 11, as shown in FIG. 1, opposite to the printed circuit board 114, the right end of the heating pad is provided with a guide portion 116, and the guide portion 116 may be a slightly narrow sheet and have a specific hardness. In the scenario shown in FIG. 1, when the heating pad is positioned within the passage of the tubular section 111 of the seat belt webbing 11, the guide portion 116 of the heating pad is first positioned within the left end of the passage, then the guide portion 116 passes through the passage and reaches the right end of the passage, and the guide portion 116 is fixed to the right end of the passage via a fixing manner such as pasting. Certainly, the above embodiments are only examples, and the seat belt system of the present invention is not limited thereto, for example, two heating pads may be provided, and the first heating wire and the second heating wire may be respectively provided on respective heating pads.

In addition, as shown in FIG. 1 and FIG. 2, the seat belt system of the present invention may further include a control module (not shown), and the control module may be provided on an outer side surface of the seat belt webbing 11 and electrically connected to the printed circuit board 114 of the heater module 12 for communication. The control module is configured to control a heating operation of the heater module 12, and in order to communicate with the control module, the printed circuit board 114 is provided with connecting posts in the form of protruding posts, and the connecting posts pass through (for example, pierce) the seat belt webbing 11 to be electrically connected to the control module. As an example, the connecting posts include a pair of first connecting posts 1141 electrically connected to the first heating wire 112 and a pair of second connecting posts 1142 electrically connected to the second heating wire 113. The pair of first connecting posts 1141 are set as a positive electrode post and a negative electrode post of the first heating wire 112, respectively, and the pair of second connecting posts 1142 are set as a positive electrode post and a negative electrode post of the second heating wire 113, respectively. The first heating wire 112 and the second heating wire 113 are electrically connected to the printed circuit board and the control module via their respective connecting posts. In this way, heating operations of the first heating wire 112 and the second heating wire 113 are controlled by the control module via the first connecting posts 1141 and the second connecting posts 1142, respectively.

In addition, as an example, as shown in FIG. 2, the printed circuit board 114 is further provided with a thermistor configured to monitor the temperature of the heating pad, and the connecting posts further include a pair of third connecting posts 1143 electrically connected to the thermistor. Similar to the two pairs of connecting posts described above, the pair of third connecting posts 1143 are provided as a positive electrode post and a negative electrode post of the thermistor, respectively. The thermistor is electrically connected to the printed circuit board and the control module via the pair of third connecting posts 1143 to transmit a signal related to the temperature of the heating pad. The thermistor is, for example, an NTC thermistor, and for another example, the heating pad includes a substrate (for example, formed by weaving a nylon material or a non-woven fabric material, or a PU adhesive film substrate), and the above-described heating wires are, for example, woven on the substrate in a bent shape. One end of the thermistor is connected to the printed circuit board 114, and the other end thereof extends in between the heating wires to measure the temperature of the heating wires. The control module executes a heating operation via the heating wires when the temperature of the heating pad measured by the thermistor is lower than a predetermined value. In addition, when the temperature of the heating pad measured by the thermistor reaches the predetermined value, the control module stops the heating operation of the heating wires.

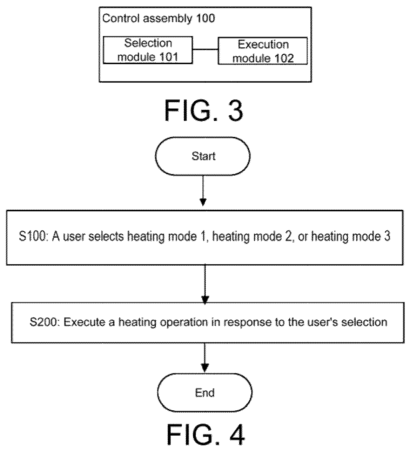

FIG. 3 schematically illustrates a control assembly according to the present invention. The control module according to the present invention will be described below with reference to FIG. 3.

A control assembly 100 according to the present invention includes a selection module 101 and an execution module 102, and the control assembly 100 is configured to control a heating operation of the seat belt webbing 11 in the seat belt system 10 of the present invention. Specifically, the selection module 101 may be a control panel that communicates with an electronic control unit of a vehicle, for example, a dedicated display screen, and an occupant may select a heating mode to be executed by tapping options displayed on the display screen. Certainly, the manner in which the occupant implements selection is not limited to the above-described manner of tapping the screen, and for example, input manners such as voice input and key input may be used for the selection operation. Thereafter, a signal indicating selection by the occupant by means of the selection module 101 is transmitted to the electronic control unit via a CAN bus or an LIN bus and then transmitted to the above-mentioned control module. Then, the first heating wire and/or the second heating wire are controlled by the control module to execute the heating operation according to the received signal. During this period, the temperature in the heating pad is monitored by the thermistor, and when it is detected that the temperature of the heating pad has reached a predetermined temperature, the thermistor transmits the signal to the control module, and the control module controls the first heating wire and/or the second heating wire to stop the heating operation.

The heating mode includes heating mode 1, heating mode 2, and heating mode 3, and the execution module 102 includes the first heating wire 112 and the second heating wire 113, and is configured to execute a heating operation via at least one of the first heating wire 112 and the second heating wire 113 in response to the occupant's selection. Definitions are as follows: Heating mode 1 is defined as only the first heating wire 112 executing a heating operation, heating mode 2 is defined as only the second heating wire 113 executing a heating operation, and heating mode 3 is defined as both the first heating wire 112 and the second heating wire 113 executing a heating operation. In other words, the occupant chooses to execute a heating operation on body part 1, or body part 2, or body parts 1 and 2 by means of the selection module 101. For a three-point seat belt, the above-described heating mode 1 may be configured to heat the chest of the occupant, the above-described heating mode 2 may be configured to heat the abdomen of the occupant, and the above-described heating mode 3 is configured to heat both the abdomen and the chest of the occupant. Certainly, this is merely an example, and the heating modes and the heating wires for the chest and the abdomen of the occupant may be set differently from the above-described example.

FIG. 4 schematically illustrates a control method according to the present invention. The control method according to the present invention will be described below with reference to FIG. 4.

The present invention further provides a control method. The control method, for example, may be integrated into the above-described control assembly and is used for controlling a heating operation of the seat belt webbing in the seat belt system of the present invention.

The control method includes the following steps:
Step S100: selecting, by an occupant, heating mode 1, heating mode 2, or heating mode 3; and
Step S200: executing a heating operation in response to the occupant's selection.

As already described, the occupant may implement the selection operation of step S100 via the control panel. For example, the occupant may select the heating mode to be executed by tapping an option. Certainly, the manner in which the occupant implements the selection is not limited to the manner of the above-described tapping operation, and for example, input manners such as voice input and key input may be used for the selection operation. Thereafter, a signal indicating selection by the occupant is transmitted to an electronic control unit of a vehicle via a CAN bus or an LIN bus and then transmitted to the above-mentioned control module. Then, the first heating wire and/or the second heating wire are controlled by the control module to execute the heating operation according to the received signal, so as to complete step S200. Moreover, during execution of step S200, the temperature in the heating pad is monitored by the thermistor, and when it is detected that the temperature of the heating pad has reached a predetermined temperature, the thermistor transmits the signal to the control module, and the control module controls the first heating wire and/or the second heating wire to stop the heating operation.

In the control method of the present invention, definitions of the heating modes are also that heating mode 1 is defined as only the first heating wire executing a heating operation, heating mode 2 is defined as only the second heating wire executing a heating operation, and heating mode 3 is defined as both the first heating wire and the second heating wire executing a heating operation.

It should be understood that the advantages described above with reference to the seat belt system of the present invention are equally applicable to the control assembly and the control method of the present invention, and will not be repeated here to prevent redundancy.

As described above, although the exemplary embodiments of the present invention have been described with reference to the accompanying drawings in the description, the present invention is not limited to the aforementioned specific embodiments, and the scope of protection of the present invention should be defined by the claims and equivalent meanings thereof.

## Claims

1. A seat belt system (10), comprising:
a seat belt webbing (11), comprising a tubular section (111) defining a passage; and
a heater module (12), comprising a heating pad arranged within the passage and heating wires fixed on the heating pad;
**characterized in that**:
the heating wires comprise a first heating wire (112) and a second heating wire (113) connected in parallel to a printed circuit board (114), wherein the first heating wire (111) has a first extension length extending in the length direction of the seat belt webbing (11), the second heating wire (113) has a second extension length extending in the length direction, and the first extension length is greater than the second extension length; and
the first heating wire (112) comprises a first heating section (1121) and a second heating section (1122) connected in series, the heating power of the first heating section (1121) is less than the heating power of the second heating section (1122), and the first heating section (1121) and the second heating wire (113) at least partially overlap in the thickness direction of the seat belt webbing (11).

2. The seat belt system (10) according to claim 1, further comprising a control module configured to control a heating operation of the heater module (12), wherein the printed circuit board (114) is provided with connecting posts in the form of protruding posts, and the connecting posts pass through the seat belt webbing (11) to be electrically connected to the control module.

3. The seat belt module (10) according to claim 2, wherein the connecting posts comprise a pair of first connecting posts (1141) electrically connected to the first heating wire (112), and a pair of second connecting posts (1142) electrically connected to the second heating wire (113).

4. The seat belt module (10) according to claim 3, wherein a thermistor configured to monitor the temperature of the heating pad is further provided on the printed circuit board (114), and the connecting posts further comprise a pair of third connecting posts (1143) electrically connected to the thermistor.

5. The seat belt system (10) according to claim 1, wherein the first heating section (1121) and the second heating section (1122) are manufactured from materials having different electrical resistivities and are electrically connected to each other at respective end portions.

6. The seat belt system (10) according to claim 1, wherein only one heating pad is provided, one end of the heating pad is provided with the printed circuit board (114), and the other end thereof is provided with a guide portion (116), wherein the guide portion (116) is configured to pass through the passage from a first end of the passage to reach and be fixed to a second end of the passage opposite to the first end.

7. A control assembly (100), configured to control a heating operation of the seat belt webbing (11) in the seat belt system (10) according to any one of claims 1 to 6,
**characterized in that**:
the control assembly (100) comprises a selection module (101) and an execution module (102), wherein the selection module (101) comprises heating mode 1, heating mode 2, and heating mode 3 for an occupant to select, and the execution module (102) comprises the first heating wire (112) and the second heating wire (113) and is configured to execute a heating operation via at least one of the first heating wire (112) and the second heating wire (113) in response to the occupant's selection,
wherein,
heating mode 1 is defined as only the first heating wire (112) executing a heating operation, heating mode 2 is defined as only the second heating wire (113) executing a heating operation, and heating mode 3 is defined as both the first heating wire (112) and the second heating wire (113) executing a heating operation.

8. The control assembly (100) according to claim 7, wherein the selection module (101) is configured as a control panel communicating with an electronic control unit of a vehicle.

9. The control assembly (100) according to claim 8, wherein heating mode 1 is configured to heat the chest of the occupant, heating mode 2 is configured to heat the abdomen of the occupant, and heating mode 3 is configured to heat the abdomen and the chest of the occupant.

10. A control method, used to control a heating operation of the seat belt webbing (11) in the seat belt system (10) according to any one of claims 1 to 6,
**characterized in that** the method comprises the following steps:
selecting, by an occupant, heating mode 1, heating mode 2, or heating mode 3; and
executing a heating operation in response to the occupant's selection,
wherein,
heating mode 1 is defined as only the first heating wire executing a heating operation, heating mode 2 is defined as only the second heating wire executing a heating operation, and heating mode 3 is defined as both the first heating wire and the second heating wire executing a heating operation.
